(19) Europäisches Patentamt
European Patent Office
Office européen des brevets

(11) EP 3 668 932 B1

(12) # EUROPEAN PATENT SPECIFICATION

(45) Date of publication and mention of the grant of the patent:
**28.02.2024 Bulletin 2024/09**

(21) Application number: **18759702.6**

(22) Date of filing: **17.08.2018**

(51) International Patent Classification (IPC):
***C09D 11/00*** *(2014.01)* ***C09D 11/30*** *(2014.01)*
***B32B 7/12*** *(2006.01)* ***B44C 1/17*** *(2006.01)*
***C09J 4/06*** *(2006.01)* ***C09D 11/101*** *(2014.01)*
***C09D 11/38*** *(2014.01)* ***C09D 4/06*** *(2006.01)*

(52) Cooperative Patent Classification (CPC):
**C09D 11/30; B32B 7/12; B44C 1/1733; C09D 4/06; C09D 11/00; C09D 11/101; C09D 11/38; C09J 4/06;** B41M 3/006

(86) International application number:
**PCT/GB2018/052337**

(87) International publication number:
**WO 2019/034889 (21.02.2019 Gazette 2019/08)**

(54) **INKJETTABLE ADHESIVE**

TINTENSTRAHLDRUCKBARER KLEBSTOFF

ADHÉSIF POUR IMPRESSION À JET D'ENCRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.08.2017 GB 201713260**
**21.12.2017 GB 201721635**

(43) Date of publication of application:
**24.06.2020 Bulletin 2020/26**

(73) Proprietor: **Fujifilm Speciality Ink Systems Limited**
**Broadstairs, Kent CT10 2LE (GB)**

(72) Inventor: **GOULD, Nigel**
**Broadstairs**
**Kent CT10 2LE (GB)**

(74) Representative: **Elkington and Fife LLP**
**Prospect House**
**8 Pembroke Road**
**Sevenoaks, Kent TN13 1XR (GB)**

(56) References cited:
**EP-A1- 3 034 312** **EP-A1- 3 300 915**
**WO-A1-2015/140540** **WO-A1-2017/122046**
**US-A1- 2006 098 064** **US-A1- 2013 222 497**
**US-A1- 2013 230 701** **US-B2- 9 587 127**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 668 932 B1

## Description

The present invention relates to a printing ink and in particular, to an inkjet adhesive that can be used in a cold foil printing method. The present invention also relates to such a method.

Cold foil printing is a method of printing metallic foil onto a substrate in order to enhance the decorative appearance of printed labels and packaging for a wide variety of goods such as cosmetics and drinks. The foil is commonly applied to the substrate using a colourless UV-curable adhesive printed onto the label or packaging using an analogue process such as flexography. For example, a standard method of cold foil printing involves printing an image onto a substrate using a colourless UV-curable adhesive, pressing a metallic foil mounted on a carrier sheet onto the surface of the adhesive, UV curing the adhesive through the metallic foil to bond the foil to the desired image areas and removing the carrier sheet along with any waste foil that is not adhered to the adhesive to reveal a high-lustre metallic print of the desired image.

Whilst the method described above is highly effective at providing metallic images, only a single decorative design can be applied as determined by the design on the flexographic impression roller. There is a desire in the art to have more control over the image formation and to increase the productivity of the process using more versatile techniques which are susceptible to digital printing, such as inkjet printing. Specifically, there is a desire in the art to vary the foiled image during the printing run to allow different languages or designs to be used depending on the target market for the product.

Using inkjet inks as the adhesive could be used to vary the design of the foiled image by altering the file input to the inkjet printer. However, inkjet inks are markedly different from flexographic inks and the replacement of flexographic inks with inkjet inks in the above cold foil printing process, whilst desirable, has not been achieved. In this respect, inkjet ink films are generally much thicker (10-40 microns) than flexographic ink films (1-2 microns). The viscosity of inkjet inks is also much lower (10-30 mPas) than flexographic inks (1-2 Pas). Therefore, simply replacing a flexographic ink with an inkjet ink in the above cold foil printing process, results in excessive spreading of the image and significant loss of detail.

WO 2017/122046 discloses a method of applying foil from a foil web to a substrate. The method may comprise: ink-jet printing a UV-curable adhesive onto the substrate in a predetermined image area;subjecting the adhesive to a first curing by exposing the adhesive to UV light in a dosage range of 140-170mJ/cm2; passing the substrate and a foil web through a nip where the foil web is pressed against the adhesive; subjecting the adhesive disposed between the substrate and the foil web to a second curing by exposing the adhesive to UV light in a dosage of at least 250 $mJ/cm^2$; and separating excess foil from the substrate, to leave foil on the predetermined image area. Substrates and UV-curable adhesives are also described.

EP 3 034 312 relates to radiation-curable compositions for printing on glass. The radiation-curable composition contains a) a free radical polymerisable composition and b) at least one acetal-containing polymer. The free radical polymerisable composition contains 95 wt% of one or more monofunctional (meth)acrylates, wherein at least 80 wt% of the one or more monofunctional (meth)acrylates contain at least one five or six membered acetal ring.

US 2013/222497 relates to a photocurable inkjet ink set including an undercoating inkjet ink containing a (meth)acrylic acid ester having a vinyl ether group and an overcoating inkjet ink.

US 2013/230701 relates to an actinic radiation-curing type ink set containing a coloured ink composition and a clear ink composition (C1). The coloured ink composition contains a radically polymerisable compound (Component A1), a polymerisation initiator (Component B1) and a colourant (Component D). The clear ink composition (C1) contains a radically polymerisable compound (Component A2), a polymerisation initiator (Component B2) and an organic solvent (Component S).

US 9 587 127 relates to printing ink compositions containing acrylate monomers, particularly o-phenyl phenoxyethyl acrylate.

US 2006/098064 relates to an inkjet ink which is substantially free of water, volatile organic solvents and multifunctional (meth)acrylates. The ink contains at least one monofunctional (meth)acrylate monomer, at least one $\alpha,\beta$-unsaturated ether monomer, at least one radical photoinitiator and at least one colouring agent.

WO 2015/140540 relates to an inkjet ink containing a cyclic monofunctional (meth)acrylate monomer and a free radical photoinitiator package, which package includes benzophenone.

EP 3 300 915 relates to an inkjet printing method for decorative surfaces including the steps of: jetting an image on a first thermoplastic foil with a free radical UV-curable inkjet ink; at least partially UV curing the jetted image on the first thermoplastic foil; and inserting a layer containing a vinyl copolymer between a second thermoplastic foil and the printed first thermoplastic foil. The ink contains a polymerisable composition containing 30-90 wt% of a monofunctional compound, 10-70 wt% of a difunctional compound and 0-10 wt% of a tri- or higher functionality compound.

There therefore remains a need in the art for an inkjet adhesive that can be used in a cold foil printing method.

Accordingly, the present invention provides an inkjet adhesive comprising: two or more monofunctional monomers, each having a log $D_{octanol/water}$ of 1.1 or higher; either an additional monofunctional monomer having a log $D_{octanol/water}$ of 1.1 or higher or a difunctional monomer having a log $D_{octanol/water}$ of 1.1 or higher; and one or more

photoinitiators, wherein the inkjet adhesive: contains less than 0.5% by weight of monomers having a log $D_{octanol/water}$ of lower than 1.1, based on the total weight of the inkjet adhesive; contains less than 10% by weight of multifunctional monomers, based on the total weight of the inkjet adhesive; and is free from a colouring agent, and wherein

$$\log\ D_{\mathrm{oct/wat}} = \log\left(\frac{[\mathrm{solute}]^{\mathrm{ionized}}_{\mathrm{octanol}} + [\mathrm{solute}]^{\mathrm{un\text{-}ionized}}_{\mathrm{octanol}}}{[\mathrm{solute}]^{\mathrm{ionized}}_{\mathrm{water}} + [\mathrm{solute}]^{\mathrm{un\text{-}ionized}}_{\mathrm{water}}}\right)$$

The formulation provides an inkjet adhesive with the ideal balance of properties required by a method of cold foil printing. Specifically, the inkjet adhesive has the ideal balance of through and surface curing properties. The inkjet adhesive is capable of being sufficiently pinned to fix the image whilst remaining sufficiently liquid on the surface to ensure full wetting of the overlying foil. The inkjet adhesive contains monofunctional monomers having a low polarity to ensure a poor surface cure of the adhesive. The inkjet adhesive also demonstrates good adhesion to substrates.

The present invention further provides a method of cold foil printing comprising:

(i) providing this inkjet adhesive;
(ii) jetting the inkjet adhesive onto a substrate to form a base of an image, wherein the inkjet adhesive is the inkjet adhesive of the present invention;
(iii) pinning the inkjet adhesive;
(iv) applying a foil sheet to the substrate to adhere the foil to the inkjet adhesive to form the image;
(v) curing the inkjet adhesive by exposing the inkjet adhesive to actinic radiation through the foil sheet; and
(vi) removing any excess foil to reveal the image.

The present invention will now be described with reference to the accompanying drawings, in which:

Fig. 1 shows a high-definition image with the fine lines preserved using an inkjet adhesive of the present invention;
Fig. 2 shows a high-definition image with a pinhole-free block area using an inkjet adhesive of the present invention;
Fig. 3 shows a low-definition image with the fine lines lost using a comparative inkjet adhesive; and
Fig. 4 shows a low-definition image with a block area containing pinholes using a comparative inkjet adhesive.

The present invention provides high-lustre metallic images with high definition. Any image areas containing a solid block of foil are pinhole free. The image also exhibits good adhesion to the underlying substrate.

In order to prevent excessive spreading of the adhesive, which would adversely affect the image, it is necessary to partially cure the adhesive. This partial curing step is known in the art as "pinning". In this way, the printed adhesive film is sufficiently fixed to hold the image in place whilst remaining sufficiently liquid on the surface of the printed adhesive film to fully wet the overlying foil.

Initially, it was thought that the balance of through and surface cure of the printed adhesive film could be controlled through the dose and intensity of a UV LED cure system used to pin the printed adhesive film. However, achieving the desired balance of through and surface cure using this approach alone proved impossible; either excessive spread occurred in fine detail areas of the image or numerous pinholes were visible in block areas of the image. Therefore, the inventors came to realise that the key to achieving the balance of through and surface cure of the printed adhesive film lay in the formulation of the inkjet adhesive.

First, the photoinitiator system was investigated in the hope of finding photoinitiators that achieved the correct balance of through and surface cure. For example, some photoinitiators mainly function in body of a printed ink film resulting in through cure whereas some photoinitiators mainly function at the surface of a printed ink film resulting in surface cure. However, this approach was complicated by the need to cure the image through the foil film and thus the printed adhesive film ultimately has to be receptive to longer wave UV radiation that can penetrate through a metallic foil. Whilst some limited improvements were made to the balance of through and surface cure, these improvements were at the expense of the adhesion of the foiled image to the substrate. Thus, this approach also did not provide the desired balance of properties.

The monomers of the inkjet adhesive were then investigated and surprisingly, the inventors found that by using only low-polarity monomers, the desired balance of properties could be achieved. The low-polarity monomers provide the inkjet adhesive with the desired balance of through and surface curing properties, ensuring that a printed adhesive film has sufficient through curing properties to be pinned in place and poor surface curing properties to fully wet the overlying foil. Using monofunctional monomers in the inkjet adhesive also helps to provide good adhesion of the image to the substrate.

The present invention relates to an inkjet adhesive. An adhesive binds two surfaces together. The inkjet adhesive is an inkjet ink. The ink acts as an adhesive because it is capable of binding an overlying foil sheet to an underlying substrate.

The inkjet adhesive comprises two or more monofunctional monomers, each having a log $D_{octanol/water}$ of 1.1 or higher. Preferably, the inkjet adhesive comprises three or more monofunctional monomers, each having a log $D_{octanol/water}$ of 1.1 or higher.

Monofunctional monomers are well known in the art. A radiation-curable monofunctional monomer has one functional group, which takes part in the polymerisation reaction on curing.

Monomers typically have a molecular weight of less than 600, preferably more than 200 and less than 450. Monomers are typically added to inkjet inks to reduce the viscosity of the inkjet ink. They therefore preferably have a viscosity of less than 150 mPas at 25°C, more preferably less than 100mPas at 25°C and most preferably less than 20 mPas at 25°C. Monomer viscosities can be measured using an ARG2 rheometer manufactured by T.A. Instruments, which uses a 40 mm oblique / 2° steel cone at 25°C with a shear rate of 25 $s^{-1}$.

Log D is a measure of the polarity of a compound. The distribution-coefficient D is the ratio of concentrations of a compound in a mixture of two immiscible phases at equilibrium. Therefore, this ratio is a measure of the difference in solubility of the compound in these two phases. Both phases are usually solvents. The two solvents have different polarity and the most common solvents are water and 1-octanol (octanol). Water is the polar solvent and octanol is the non-polar solvent. Log D is the logarithm of the ratio of the sum of the concentrations of all forms of the compound (ionised plus un-ionised) in each of the two phases. Thus, when the two phases are water and octanol:

$$\log D_{\mathrm{oct/wat}} = \log\left(\frac{[\mathrm{solute}]^{\mathrm{ionized}}_{\mathrm{octanol}} + [\mathrm{solute}]^{\mathrm{un\text{-}ionized}}_{\mathrm{octanol}}}{[\mathrm{solute}]^{\mathrm{ionized}}_{\mathrm{water}} + [\mathrm{solute}]^{\mathrm{un\text{-}ionized}}_{\mathrm{water}}}\right)$$

As one phase is water, log $D_{octanol/water}$ is dependent on the pH of the aqueous phase. For measurements of distribution coefficients, the pH of the aqueous phase is buffered to a specific value such that the pH is not significantly perturbed by the introduction of the compound. However, when the compound is non-ionisable (i.e. it does not possess groups capable of salt formation), the distribution coefficient is independent of pH.

A number of methods of measuring distribution coefficients have been developed including the shake-flask, reverse phase HPLC and pH-metric techniques. Distribution coefficients may also be theoretical and based on the structure of the compound. For example, distribution coefficients may be calculated using software or online on websites such as the Chemicalize website. The distribution coefficients discussed herein are theoretical values independent of pH and calculated at 20°C based on the structures of the compounds. They were determined using the Chemicalize website.

A log $D_{octanol/water}$ of 1.1 or higher is associated with compounds having a low polarity. Thus, the inkjet adhesive comprises one or more monofunctional monomers having a low polarity.

An adhesive containing low polarity monofunctional monomers is advantageous in achieving a poor surface cure of the printed adhesive film when the adhesive is pinned. Surface cure of an ink is generally more problematic than through cure of an ink owing to the absorption of oxygen at the surface of the printed ink film. Absorbed oxygen inhibits polymerisation by the formation of unreactive peroxide radicals from any reactive radicals, reducing initiation and propagation.

Oxygen is a non-polar molecule. Without wishing to be bound by theory, it is believed that compounds having a low polarity have a higher solubility for oxygen than compounds having a high polarity. Thus, the adhesive of the present invention contains a higher concentration of dissolved oxygen from the air at the surface of the printed adhesive film by virtue of the monofunctional monomers, each having a log $D_{octanol/water}$ of 1.1 or higher, than an adhesive containing monomers having a log $D_{octanol/water}$ of lower than 1.1. Consequently, the adhesive of the present invention inhibits surface cure to a greater extent than an adhesive containing monomers having a log $D_{octanol/water}$ of lower than 1.1.

The adhesive contains less than 0.5% by weight of monomers having a log $D_{octanol/water}$ of lower than 1.1, based on the total weight of the inkjet adhesive. Monomers having a log $D_{octanol/water}$ of lower than 1.1 are associated with a high polarity. An adhesive containing such monomers has a lower concentration of dissolved oxygen from the air at the surface of the printed adhesive film than an adhesive containing monomers having a log $D_{octanol/water}$ of 1.1 or higher. Such an adhesive would have good surface curing properties, which is undesirable in the present invention.

By free, it is meant that the adhesive contains no more than trace amounts (less than 0.5% by weight) of the stated monomers.

The adhesive of the present invention has a high concentration of dissolved oxygen at the surface of the printed adhesive film, and consequently, the adhesive has poor surface curing properties. Poor surface curing properties are

advantageous in that the adhesive remains liquid or at least tacky after pinning such that the overlying foil is fully wetted. In this way, the adhesive fully adheres the overlying foil to the underlying substrate giving a high quality image with no pinholes in block areas of the image.

Preferably, the inkjet ink comprises one or more monofunctional monomers having a log $D_{octanol/water}$ of 1.3 or higher and more preferably, of 1.5 or higher. Preferably, the inkjet adhesive contains less than 0.5% by weight of monomers having a log $D_{octanol/water}$ of lower than 1.3, based on the total weight of the inkjet adhesive, and more preferably, the inkjet adhesive contains less than 0.5% by weight of monomers having a log $D_{octanol/water}$ of lower than 1.5, based on the total weight of the inkjet adhesive. This ensures that the adhesive has poor surface curing properties.

In a preferred embodiment, the adhesive of the present invention comprises 50-95% by weight, preferably 60-90% by weight, and most preferably 70-90% by weight of monofunctional monomers, each having a log $D_{octanol/water}$ of 1.1 or higher, based on the total weight of the inkjet adhesive.

The polymerisable groups of the two or more monofunctional monomers can be any group that are capable of polymerising upon exposure to radiation and are preferably selected from a (meth)acrylate group and a vinyl ether group.

The substituents of the monofunctional monomers are not limited other than by the constraints imposed by the log $D_{octanol/water}$ value and the use in an inkjet ink, such as viscosity, stability, toxicity etc. The substituents are typically alkyl, cycloalkyl, aryl and combinations thereof, any of which may be interrupted by heteroatoms. Non-limiting examples of substituents commonly used in the art include $C_{1-18}$ alkyl, $C_{3-18}$ cycloalkyl, $C_{6-10}$ aryl and combinations thereof, such as $C_{6-10}$ aryl- or $C_{3-18}$ cycloalkyl-substituted $C_{1-18}$ alkyl, any of which may be interrupted by 1-10 heteroatoms, such as oxygen or nitrogen, with nitrogen further substituted by any of the above described substituents. The substituents may together also form a cyclic structure.

In a preferred embodiment, the adhesive of the present invention comprises one or more monofunctional (meth)acrylate monomers, each having a log $D_{octanol/water}$ of 1.1 or higher. Monofunctional (meth)acrylate monomers are well known in the art and are preferably the esters of acrylic acid.

Mixtures of (meth)acrylates may also be used. Preferably, the inkjet adhesive comprises two or more, more preferably three or more monofunctional (meth)acrylate monomers, each having a log $D_{octanol/water}$ of 1.1 or higher.

Examples of monofunctional (meth)acrylate monomers include cyclic monofunctional (meth)acrylate monomers and acyclic-hydrocarbon monofunctional (meth)acrylate monomers such as phenoxyethyl acrylate (PEA), cyclic TMP formal acrylate (CTFA), isobornyl acrylate (IBOA), tetrahydrofurfuryl acrylate (THFA), 3,3,5-trimethylcyclohexyl acrylate (TMCHA), 2-(2-ethoxyethoxy)ethyl acrylate, octadecyl acrylate (ODA), tridecyl acrylate (TDA), isodecyl acrylate (IDA), lauryl acrylate and mixtures thereof.

Preferably, the inkjet adhesive comprises isobornyl acrylate (IBOA), cyclic trimethylolpropane formal acrylate (CTFA), phenoxyethyl acrylate (PEA) or mixtures thereof. The preferred examples of the one or more monofunctional monomers, each having a log $D_{octanol/water}$ of 1.1 or higher, have the following chemical structure:

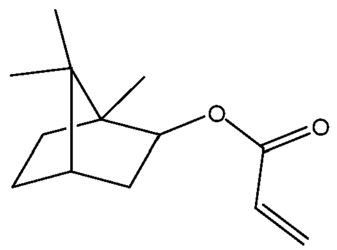

Isobornyl acrylate (IBOA)
mol wt 208 g/mol
log $D_{octanol/water}$ 3.42

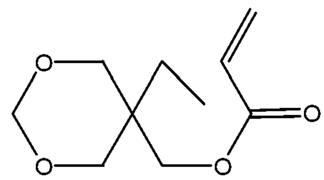

Cyclic TMP formal acrylate (CTFA)
mol wt 200 g/mol
log $D_{octanol/water}$ 1.64

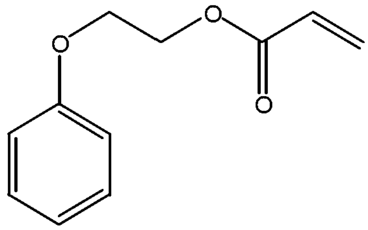

Phenoxyethyl acrylate (PEA)

mol wt 192 g/mol

log $D_{octanol/water}$ 2.56

In one embodiment, the only monofunctional monomers present in the inkjet adhesive are IBOA, CTFA and/or PEA.

Preferably, the inkjet adhesive comprises 10-50% by weight, more preferably 20-40% by weight of IBOA, based on the total weight of the inkjet adhesive. The inkjet adhesive also preferably comprises 5-25%, more preferably 10-20% by weight of CTFA, based on the total weight of the inkjet adhesive. Preferably, the inkjet adhesive comprises 20-60%, more preferably 30-50% by weight of PEA, based on the total weight of the inkjet adhesive.

In a preferred embodiment, the inkjet adhesive comprises: isobornyl acrylate; one or more additional monofunctional monomers, each having a log $D_{octanol/water}$ of 1.1 or higher; either an additional monofunctional monomer having a log $D_{octanol/water}$ of 1.1 or higher or a difunctional monomer having a log $D_{octanol/water}$ of 1.1 or higher;_and one or more photoinitiators, wherein the inkjet adhesive: contains less than 0.5% by weight of monomers having a log $D_{octanol/water}$ of lower than 1.1, based on the total weight of the inkjet adhesive; contains less than 10% by weight of multifunctional monomers, based on the total weight of the inkjet adhesive; and is free from a colouring agent. The one or more additional monofunctional monomers are additional in the sense that they are one or more monofunctional monomers, other than isobornyl acrylate.

In another preferred embodiment, the inkjet adhesive comprises: isobornyl acrylate; phenoxyethyl acrylate; either an additional monofunctional monomer having a log $D_{octanol/water}$ of 1.1 or higher or a difunctional monomer having a log $D_{octanol/water}$ of 1.1 or higher; and one or more photoinitiators, wherein the inkjet adhesive: contains less than 0.5% by weight of monomers having a log $D_{octanol/water}$ of lower than 1.1, based on the total weight of the inkjet adhesive; contains less than 10% by weight of multifunctional monomers, based on the total weight of the inkjet adhesive; and is free from a colouring agent.

The inkjet adhesive of the present invention may further comprise an $\alpha,\beta$-unsaturated ether monomer, which can polymerise by free-radical polymerisation and may be useful for reducing the viscosity of the inkjet adhesive when used in combination with one or more (meth)acrylate monomers. Examples are well known in the art and include vinyl ethers such as ethylene glycol monovinyl ether. Mixtures of $\alpha,\beta$-unsaturated ether monomers may be used.

The adhesive is preferably free from an N-vinyl amide monomer, an N-acryloyl amine monomer and an N-vinyl carbamate monomer.

N-Vinyl amide monomers are well-known monomers in the art. N-vinyl amide monomers have a vinyl group attached to the nitrogen atom of an amide which may be further substituted in an analogous manner to the (meth)acrylate monomers. Examples include N-vinyl caprolactam (NVC) and N-vinyl pyrrolidone (NVP). Similarly, N-acryloyl amine monomers are also well-known in the art. N-acryloyl amine monomers also have a vinyl group attached to an amide but via the carbonyl carbon atom and again may be further substituted in an analogous manner to the (meth)acrylate monomers. An example is N-acryloylmorpholine (ACMO).

N-Vinyl carbamate monomers are defined by the following functionality:

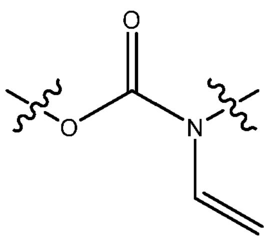

The synthesis of N-vinyl carbamate monomers is known in the art. For example, vinyl isocyanate, formed by

the Curtius rearrangement of acryloyl azide, can be reacted with an alcohol to form N-vinyl carbamates (Phosgenations - A Handbook by L. Cotarca and H. Eckert, John Wiley & Sons, 2003, 4.3.2.8, pages 212-213).

An example of an N-vinyl carbamate monomer is an N-vinyl oxazolidinone. N-Vinyl oxazolidinones have the following structure:

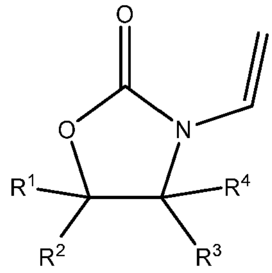

in which $R^1$ to $R^4$ are not limited other than by the constraints imposed by the use in an ink-jet ink, such as viscosity, stability, toxicity etc. The substituents are typically hydrogen, alkyl, cycloalkyl, aryl and combinations thereof, any of which may be interrupted by heteroatoms. Non-limiting examples of substituents commonly used in the art include $C_{1-18}$ alkyl, $C_{3-18}$ cycloalkyl, $C_{6-10}$ aryl and combinations thereof, such as $C_{6-10}$ aryl- or $C_{3-18}$ cycloalkyl-substituted $C_{1-18}$ alkyl, any of which may be interrupted by 1-10 heteroatoms, such as oxygen or nitrogen, with nitrogen further substituted by any of the above described substituents. $R^1$ to $R^4$ are typically independently selected from hydrogen or $C_{1-10}$ alkyl. Further details may be found in WO 2015/022228 and US 4,831,153.

A typical N-vinyl carbamate monomer is N-vinyl-5-methyl-2-oxazolidinone (NVMO). It is available from BASF and has the following structure:

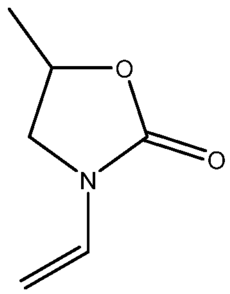

molecular weight 127 g/mol

NVMO has the IUPAC name 5-methyl-3-vinyl-1,3-oxazolidin-2-one and CAS number 3395-98-0. NVMO includes the racemate and both enantiomers. The N-vinyl carbamate monomer may be a racemate of NVMO. Alternatively, the N-vinyl carbamate monomer may be (R)-5-methyl-3-vinyl-1,3-oxazolidin-2-one. Alternatively, the N-vinyl carbamate monomer may be (S)-5-methyl-3-vinyl-1,3-oxazolidin-2-one.

N-Vinyl amide monomers, N-acryloyl amine monomers and N-vinyl carbamate monomers tend to have a log $D_{octanol/water}$ of lower than 1.1. An example of a commonly used monomer which is excluded by the present invention based on its log $D_{octanol/water}$ value is N-vinyl caprolactam (NVC), which has a log $D_{octanol/water}$ value of 1.04.

The inkjet adhesive preferably comprises one or more difunctional monomers, each having a log $D_{octanol/water}$ of 1.1 or higher.

Examples of difunctional monomers include difunctional (meth)acrylate monomers, divinyl ether monomers and vinyl ether (meth)acrylate monomers. In a preferred embodiment, the adhesive of the present invention comprises one or more difunctional (meth)acrylate monomers, each having a log $D_{octanol/water}$ of 1.1 or higher.

Difunctional (meth)acrylate monomers are well known in the art and a detailed description is therefore not required. Difunctional has its standard meaning, i.e. two groups, which take part in the polymerisation reaction on curing.

Examples of difunctional monomers having a log $D_{octanol/water}$ of 1.1 or higher include hexanediol diacrylate (HDDA) having a log $D_{octanol/water}$ of 3.12, 1,8-octanediol diacrylate having a log $D_{octanol/water}$ of 4.01, 1,9-nonanediol diacrylate having a log $D_{octanol/water}$ of 4.45, 1,10-decanediol diacrylate having a log $D_{octanol/water}$ of 4.90, 1,11-undecanediol diacrylate having a log $D_{octanol/water}$ of 5.34, 1,12-dodecanediol diacrylate having a log $D_{octanol/water}$ of 5.79, dipropylene glycol diacrylate (DPGDA) having a log $D_{octanol/water}$ of 1.50, 3-methyl-1,5-pentanediol diacrylate (MPDDA) having a log $D_{octanol/water}$ of 2.96 and tricyclodecane dimethanol diacrylate (TCDDMDA) having a log $D_{octanol/water}$ of 3.61, and the acrylate esters of ethoxylated or propoxylated glycols and polyols, for example, propoxylated neopentyl glycol diacrylate having a log $D_{octanol/water}$ of 2.71, and mixtures thereof. Also included are esters of methacrylic acid (i.e. methacrylates) including methacrylates of the above difunctional monomers and mixtures thereof. MPDDA is particularly preferred as it yields good foiling results. MPDDA has the following structure:

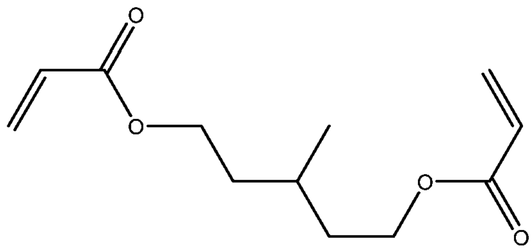

3-Methyl-1,5-pentanediol diacrylate (MPDDA)
mol wt 226 g/mol
log $D_{octanol/water}$ 2.96

When present, difunctional monomers are preferably present in 1-40% by weight, more preferably 1-30% by weight and most preferably 1-25% by weight, based on the total weight of the inkjet adhesive. In a preferred embodiment, the inkjet adhesive comprises: two monofunctional monomers, each having a log $D_{octanol/water}$ of 1.1 or higher; either an additional monofunctional monomer having a log $D_{octanol/water}$ of 1.1 or higher or a difunctional monomer having a log $D_{octanol/water}$ of 1.1 or higher; and one or more photoinitiators, wherein the inkjet adhesive: contains less than 0.5% by weight of monomers having a log $D_{octanol/water}$ of lower than 1.1, based on the total weight of the inkjet adhesive; contains less than 10% by weight of multifunctional monomers, based on the total weight of the inkjet adhesive; and is free from a colouring agent. Preferably, the inkjet adhesive contains IBOA as one of the two monofunctional monomers, each having a log $D_{octanol/water}$ of 1.1 or higher. More preferably, the inkjet adhesive contains IBOA and PEA as the two monofunctional monomers, each having a log $D_{octanol/water}$ of 1.1 or higher.

Therefore, the inkjet adhesive may comprise two monofunctional monomers, each having a log $D_{octanol/water}$ of 1.1 or higher; an additional monofunctional monomer having a log $D_{octanol/water}$ of 1.1 or higher; and one or more photoinitiators, wherein the inkjet adhesive contains less than 0.5% by weight of monomers having a log $D_{octanol/water}$ of lower than 1.1, based on the total weight of the inkjet adhesive; contains less than 10% by weight of multifunctional monomers, based on the total weight of the inkjet adhesive; and is free from a colouring agent. Alternatively, the inkjet adhesive may comprise two monofunctional monomers, each having a log $D_{octanol/water}$ of 1.1 or higher; a difunctional monomer having a log $D_{octanol/water}$ of 1.1 or higher; and one or more photoinitiators, wherein the inkjet adhesive: contains less than 0.5% by weight of monomers having a log $D_{octanol/water}$ of lower than 1.1, based on the total weight of the inkjet adhesive; contains less than 10% by weight of multifunctional monomers, based on the total weight of the inkjet adhesive; and is free from a colouring agent.

The inkjet adhesive contains less than 10% by weight of multifunctional monomers, based on the total weight of the ink. More preferably, it contains less than 5% by weight and most preferably less than 1% by weight of multifunctional monomers, based on the total weight of the ink. If multifunctional monomers are present, they have a log $D_{octanol/water}$ of 1.1 or higher.

Restricting the multifunctional monomer content of the inkjet adhesive ensures that the image has good adhesion to the substrate and good flexibility. Without wishing to be bound by theory, it is believed that the more crosslinks a monomer forms with other monomers, the more a printed ink film shrinks, which results in poor adhesion of the printed ink film to the substrate and poor flexibility. Thus, minimising the number of crosslinks that a monomer is able to form with other monomers provides the inkjet adhesive with good adhesion to the substrate and good flexibility, which results in a high quality image. The amount of multifunctional monomer that may be included in the inkjet adhesive is also restricted by the relatively high viscosity of multifunctional monomers and the requirement for the inkjet adhesive to have a low viscosity suitable for inkjet printing.

In a preferred embodiment, the only monomers present in the inkjet adhesive are the two or more monofunctional monomers and the one or more difunctional monomers, when present.

Multifunctional (meth)acrylate monomers (tri- and higher-functional) are also well known in the art and a detailed description is therefore not required. Multifunctional has its standard meaning, i.e. tri or higher, that is three or more groups, respectively, which take part in the polymerisation reaction on curing. Usually, the multifunctional (meth)acrylate monomer has a degree of functionality of four or more, e.g. 4-8.

Examples of the multifunctional acrylate monomers include trimethylolpropane triacrylate, pentaerythritol triacrylate, tri(propylene glycol) triacrylate, bis(pentaerythritol) hexaacrylate (DPHA), and the acrylate esters of ethoxylated or propoxylated glycols and polyols, for example, ethoxylated trimethylolpropane triacrylate, and mixtures thereof. Suitable multifunctional (meth)acrylate monomers also include esters of methacrylic acid (i.e. methacrylates), such as trimethylolpropane trimethacrylate. Mixtures of (meth)acrylates may also be used.

For the avoidance of doubt, (meth)acrylate is intended herein to have its standard meaning, i.e. acrylate and/or methacrylate. Mono and difunctional are intended to have their standard meanings, i.e. one or two groups, respectively, which take part in the polymerisation reaction on curing. Multifunctional (which does not include difunctional) is intended to have its standard meanings, i.e. three or more groups, respectively, which take part in the polymerisation reaction on curing.

The inkjet adhesive preferably contains less than 10% by weight of a radiation-curable (i.e. polymerisable) oligomer, based on the total weight of the inkjet adhesive. More preferably, it contains less than 5% by weight and most preferably less than 1% by weight of a radiation-curable oligomer, based on the total weight of the inkjet adhesive.

The term "curable oligomer" has its standard meaning in the art, namely that the component is partially reacted to form a pre-polymer having a plurality of repeating monomer units, which is capable of further polymerisation. The radiation-curable oligomer may polymerise by free-radical polymerisation upon exposure to radiation in the presence of a photoinitiator to form a crosslinked, solid film.

The oligomer preferably has a molecular weight of at least 450 Da and preferably at least 600 Da (whereas monomers typically have a molecular weight below these values). The molecular weight is preferably 4,000 Da or less. Molecular weights (number average) can be calculated if the structure of the oligomer is known or molecular weights can be measured using gel permeation chromatography using polystyrene standards.

The degree of functionality of the oligomer determines the degree of crosslinking and hence the properties of the cured ink. The oligomer may be multifunctional meaning that it contains on average more than one reactive functional group per molecule. The average degree of functionality may be from 2 to 6.

Oligomers are typically added to inkjet inks to increase the viscosity of the inkjet ink or to provide film-forming properties such as hardness or cure speed. They therefore preferably have a viscosity of 150 mPas or above at 25°C. Oligomer viscosities can be measured using an ARG2 rheometer manufactured by T.A. Instruments, which uses a 40 mm oblique / 2° steel cone at 60°C with a shear rate of 25 $s^{-1}$.

Radiation-curable oligomers comprise a backbone, for example a polyester, urethane, epoxy or polyether backbone, and one or more radiation-curable groups. The polymerisable group can be any group that is capable of polymerising upon exposure to radiation such as a (meth)acrylate group.

Other examples of radiation-curable oligomers include epoxy based materials such as bisphenol A epoxy acrylates and epoxy novolac acrylates, which have fast cure speeds and provide cured films with good solvent resistance.

Restricting the radiation-curable oligomer content of the inkjet adhesive ensures that the image has the ideal balance of properties as described above in regard to difunctional and multifunctional monomers.

In a preferred embodiment, the inkjet adhesive of the present invention further comprises a passive (or "inert") thermoplastic resin. A passive resin is useful for the adjustment of the viscosity of the inkjet adhesive. Passive resins are resins which do not enter into the curing process, i.e. the resin is free of functional groups which polymerise under the curing conditions to which the inkjet adhesive is exposed. In other words, resin is not a radiation-curable material. The resin may be selected from epoxy, polyester, vinyl, ketone, nitrocellulose, phenoxy or acrylate resins, or a mixture thereof and is preferably a poly(methyl (meth)acrylate) resin. The resin has a weight-average molecular weight of 15-90 KDa and preferably 25-50 KDa, as determined by GPC with polystyrene standards. A preferred resin has a (meth)acrylate backbone. A particularly preferred resin is an acrylic resin. Particularly preferred resins include Elvacite® 2013 from Lucite International. Elvacite® 2013 is a low molecular weight methyl methacrylate/n-butyl methacrylate copolymer.

The resin is preferably present at 1-10% by weight, more preferably 1-5% by weight, based on the total weight of the inkjet adhesive.

The inkjet adhesive comprises one or more photoinitiators. The one or more photoinitiators are preferably free radical photoinitiators.

Preferably, the photoinitiator is present in an amount of 1-20% by weight, preferably 1-15% by weight, based on the total weight of the ink.

The free radical photoinitiator can be selected from any of those known in the art. For example, benzophenone, 1-hydroxycyclohexyl phenyl ketone, 1-[4-(2-hydroxyethoxy)-phenyl]-2-hydroxy-2-methyl-1-propane-1-one, 2-benzyl-2-dimethylamino-(4-morpholinophenyl)butan-1-one, isopropyl thioxanthone, benzil dimethylketal, bis(2,6-dimethylbenzoyl)-2,4,4-trimethylpentylphosphine oxide or mixtures thereof. Such photoinitiators are known and commercially available such as, for example, under the trade names Irgacure and Darocur (from Ciba) and Lucirin (from BASF).

In a preferred embodiment, the one or more photoinitiators each have a $\lambda_{max}$ greater than 350 nm. Such photoinitiators are preferable as they are receptive to longer wave UV radiation that can penetrate the inkjet adhesive through the foil sheet. In a further preferred embodiment, the one or more photoinitiators comprise an acylphosphine oxide. In a particularly preferred embodiment, the one or more photoinitiators comprise bisacylphosphine oxide. A particularly preferred bisacylphosphine oxide photoinitiator is Irgacure 819 from BASF.

Mixtures of photoinitiators can be used and preferably, the inkjet adhesive comprises two or more photoinitiators.

The inkjet adhesive of the present invention is preferably free of radiation-curable material which is capable of

polymerising by cationic polymerisation. Examples of cationic-polymerisable materials include, oxetanes, cycloaliphatic epoxides, bisphenol A epoxides, epoxy novolacs and the like. The restricted radiation-curable material may comprise a mixture of cationically curable monomer and oligomer. For example, the restricted radiation-curable material may comprise a mixture of an epoxide oligomer and an oxetane monomer.

The inkjet adhesive of the present invention is also preferably free of a cationic photoinitiator. Examples of cationic photoinitiators include sulfonium or iodonium based systems. Non limiting examples include: Rhodorsil PI 2074 from Rhodia; MC AA, MC BB, MC CC, MC CC PF, MC SD from Siber Hegner; UV9380c from Alfa Chemicals; Uvacure 1590 from UCB Chemicals; and Esacure 1064 from Lamberti spa.

The inkjet adhesive of the present invention cures by free radical polymerisation only and hence the inkjet adhesive is free of radiation-curable material which polymerises by cationic polymerisation.

The inkjet adhesive of the present invention dries primarily by curing, i.e. by the polymerisation of the monomers present, as discussed hereinabove, and hence is a curable ink. The inkjet adhesive does not, therefore, require the presence of water or a volatile organic solvent to effect drying of the ink. The absence of water and volatile organic solvents means that the inkjet adhesive does not need to be dried to remove the water/solvent. However, water and volatile organic solvents have a significant viscosity-lowering effect making formulation of the inkjet adhesive in the absence of such components significantly more challenging.

Accordingly, the inkjet adhesive of the present invention is preferably substantially free of water and volatile organic solvents. Preferably, the inkjet adhesive comprises less than 5% by weight of water and volatile organic solvent combined, preferably less than 3% by weight combined, more preferably, less than 2% by weight combined and most preferably less than 1% by weight combined, based on the total weight of the inkjet adhesive. Some water will typically be absorbed by the inkjet adhesive from the air and solvents may be present as impurities in the components of the inkjet adhesive, but such low levels are tolerated.

Other components of types known in the art may be present in the inkjet adhesive of the present invention to improve the properties or performance. These components may be, for example, additional surfactants, defoamers, dispersants, stabilisers against deterioration by heat or light, reodorants, flow or slip aids, biocides and identifying tracers.

In a preferred embodiment, the inkjet adhesive of the present invention further comprises a stabiliser. The stabiliser is not particularly limited and the formulator is free to include any stabiliser in the inkjet adhesive of the present invention to improve the properties or performance of the inkjet adhesive. This stabiliser can include any stabiliser readily available and known in the art in inkjet inks. A particularly preferred stabiliser is Florstab UV12 from Kromachem Limited.

In a preferred embodiment, the inkjet adhesive of the present invention further comprises a wetting, flow, and slip additive. The additive is not particularly limited and the formulator is free to include any wetting, flow, and slip additive in the inkjet adhesive of the present invention to improve the properties or performance of the inkjet adhesive. This additive can include any wetting, flow, and slip additive readily available and known in the art in inkjet inks. A particularly preferred wetting, flow, and slip additive is TEGO® Rad 2300 from Evonik.

The inkjet adhesive is free from colouring agent. This is because the inkjet adhesive adheres the overlying foil to form a metallic image.

The inkjet adhesive comprises: two monofunctional monomers, each having a log $D_{octanol/water}$ of 1.1 or higher; either an additional monofunctional monomer having a log $D_{octanol/water}$ of 1.1 or higher or a difunctional monomer having a log $D_{octanol/water}$ of 1.1 or higher; and one or more photoinitiators, wherein the inkjet adhesive: contains less than 0.5% by weight of monomers having a log $D_{octanol/water}$ of lower than 1.1, based on the total weight of the inkjet adhesive; contains less than 10% by weight of multifunctional monomers, based on the total weight of the inkjet adhesive; and is free from a colouring agent.

Therefore, the inkjet adhesive may comprise two monofunctional monomers, each having a log $D_{octanol/water}$ of 1.1 or higher; an additional monofunctional monomer having a log $D_{octanol/water}$ of 1.1 or higher; and one or more photoinitiators, wherein the inkjet adhesive: contains less than 0.5% by weight of monomers having a log $D_{octanol/water}$ of lower than 1.1, based on the total weight of the inkjet adhesive; contains less than 10% by weight of multifunctional monomers, based on the total weight of the inkjet adhesive; and is free from a colouring agent. Alternatively, the inkjet adhesive may comprise two monofunctional monomers, each having a log $D_{octanol/water}$ of 1.1 or higher; a difunctional monomer having a log $D_{octanol/water}$ of 1.1 or higher; and one or more photoinitiators, wherein the inkjet adhesive: contains less than 0.5% by weight of monomers having a log $D_{octanol/water}$ of lower than 1.1, based on the total weight of the inkjet adhesive; contains less than 10% by weight of multifunctional monomers, based on the total weight of the inkjet adhesive; and is free from a colouring agent.

In another preferred embodiment, the inkjet adhesive of the present invention consists of: two or more monofunctional monomers, each having a log $D_{octanol/water}$ of 1.1 or higher; either an additional monofunctional monomer having a log $D_{octanol/water}$ of 1.1 or higher or a difunctional monomer having a log $D_{octanol/water}$ of 1.1 or higher; one or more photoinitiators; optionally a passive resin; and optionally an additive selected from a surfactant, a defoamer, a dispersant, a stabiliser, a reodorant, a flow or slip aid, a biocide and an identifying tracer, wherein the inkjet adhesive: contains less than 0.5% by weight of monomers having a log $D_{octanol/water}$ of lower than 1.1, based on the total weight

of the inkjet adhesive; contains less than 10% by weight of multifunctional monomers, based on the total weight of the inkjet adhesive; and is free from a colouring agent.

Preferably, the inkjet adhesive of the present invention consists of: two monofunctional monomers, each having a log $D_{octanol/water}$ of 1.1 or higher; either an additional monofunctional monomer having a log $D_{octanol/water}$ of 1.1 or higher or a difunctional monomer having a log $D_{octanol/water}$ of 1.1 or higher; one or more photoinitiators; optionally a passive resin; and optionally an additive selected from a surfactant, a defoamer, a dispersant, a stabiliser, a reodorant, a flow or slip aid, a biocide and an identifying tracer, wherein the inkjet adhesive: contains less than 0.5% by weight of monomers having a log $D_{octanol/water}$ of lower than 1.1, based on the total weight of the inkjet adhesive; contains less than 10% by weight of multifunctional monomers, based on the total weight of the inkjet adhesive; and is free from a colouring agent.

Therefore, the inkjet adhesive of the present invention may consist of: two monofunctional monomers, each having a log $D_{octanol/water}$ of 1.1 or higher; an additional monofunctional monomer having a log $D_{octanol/water}$ of 1.1 or higher; one or more photoinitiators; optionally a passive resin; and optionally an additive selected from a surfactant, a defoamer, a dispersant, a stabiliser, a reodorant, a flow or slip aid, a biocide and an identifying tracer, wherein the inkjet adhesive: contains less than 0.5% by weight of monomers having a log $D_{octanol/water}$ of lower than 1.1, based on the total weight of the inkjet adhesive; contains less than 10% by weight of multifunctional monomers, based on the total weight of the inkjet adhesive; and is free from a colouring agent. Alternatively, the inkjet adhesive of the present invention may consist of: two monofunctional monomers, each having a log $D_{octanol/water}$ of 1.1 or higher; a difunctional monomer having a log $D_{octanol/water}$ of 1.1 or higher; one or more photoinitiators; optionally a passive resin; and optionally an additive selected from a surfactant, a defoamer, a dispersant, a stabiliser, a reodorant, a flow or slip aid, a biocide and an identifying tracer, wherein the inkjet adhesive: contains less than 0.5% by weight of monomers having a log $D_{octanol/water}$ of lower than 1.1, based on the total weight of the inkjet adhesive; contains less than 10% by weight of multifunctional monomers, based on the total weight of the inkjet adhesive; and is free from a colouring agent.

The inkjet adhesive exhibits a desirable low viscosity (100 mPas or less, more preferably 50 mPas or less at 25°C).

Ink viscosity may be measured using a Brookfield viscometer fitted with a thermostatically controlled cup and spindle arrangement, such as a DV1 low-viscosity viscometer running at 20 rpm at 25°C with spindle 00.

The surface tension of the inkjet adhesive may be controlled by the addition of one or more surface active materials such as commercially available surfactants. Surfactants are well known in the art and a detailed description is not required. Adjustment of the surface tension of the inks allows control of the surface wetting of the inkjet adhesive on various substrates, for example, plastic substrates. Too high a surface tension can lead to ink pooling and/or a mottled appearance in high coverage areas of the print. Too low a surface tension can lead to excessive ink bleed. The surface tension is preferably in the range of 20-40 $mNm^{-1}$ and more preferably 21-32 $mNm^{-1}$.

The inkjet adhesive may be prepared by known methods such as stirring with a high-speed water-cooled stirrer, or milling on a horizontal bead-mill.

The present invention also provides a method of cold foil printing comprising:

(i) providing an inkjet adhesive;
(ii) jetting the inkjet adhesive onto a substrate to form a base of an image, wherein the inkjet adhesive is the inkjet adhesive of the present invention;
(iii) pinning the inkjet adhesive;
(iv) applying a foil sheet to the substrate to adhere the foil to the inkjet adhesive to form the image;
(v) curing the inkjet adhesive by exposing the inkjet adhesive to actinic radiation through the foil sheet; and
(vi) removing any excess foil to reveal the image.

In step (i), an inkjet adhesive is provided as described above.

In step (ii), the inkjet adhesive of the present invention is jetted onto a substrate to form a base of an image. The image is defined in this step. The inkjet adhesive can be thought of as forming a base for the image that will be formed after the application of the foil to the inkjet adhesive.

Printing is performed by inkjet printing, e.g. on a single-pass inkjet printer, for example for printing (directly) onto the substrate, on a roll-to-roll printer or a flat-bed printer. A suitable printer is a flatbed UV printer, for example from the Onset series from Inca Digital.

In inkjet printing, minute droplets of black, white or coloured ink are ejected in a controlled manner from one or more reservoirs or printing heads through narrow nozzles on to a substrate which is moving relative to the reservoirs. The ejected ink forms an image on the substrate. For high-speed printing, the inks must flow rapidly from the printing heads, and, to ensure that this happens, they must have, in use, a low viscosity, typically below 100 mPas at 25°C (although in most applications the viscosity should be below 50 mPas, and often below 25 mPas). Typically, when ejected through the nozzles, the ink has a viscosity of less than 25 mPas, preferably 5-15 mPas and ideally 7-12 mPas at the

jetting temperature, which is often elevated to about 40-50°C (the ink might have a much higher viscosity at ambient temperature). The inks must also be resistant to drying or crusting in the reservoirs or nozzles.

For these reasons, inkjet inks for application at or near ambient temperatures are commonly formulated to contain a large proportion of a mobile liquid vehicle or solvent.

In order to produce a high quality printed image a small jetted drop size is desirable. Preferably the inkjet ink is jetted at drop sizes below 90 picolitres, preferably below 35 picolitres and most preferably below 10 picolitres.

To achieve compatibility with print heads that are capable of jetting drop sizes of 90 picolitres or less, a low viscosity ink is required. A viscosity of 15 mPas or less at 25°C is preferred, for example, 10 to 12 mPas, 18 to 20 mPas, or 24 to 26 mPas.

Ink viscosity may be measured using a Brookfield viscometer fitted with a thermostatically controlled cup and spindle arrangement, such as a DV1 low-viscosity viscometer running at 20 rpm at 25°C with spindle 00.

Print heads account for a significant portion of the cost of an entry level printer and it is therefore desirable to keep the number of print heads (and therefore the number of inks in the ink set) low. Reducing the number of print heads can reduce print quality and productivity. It is therefore desirable to balance the number of print heads in order to minimise cost without compromising print quality and productivity.

The substrate is not limited. Examples of substrates include those composed of PVC, polyester, polyethylene terephthalate (PET), PETG, polyethylene, polypropylene, and all cellulosic materials or their mixtures/blends with the aforementioned synthetic materials.

In step (iii), the inkjet adhesive is pinned. This is an important step in the method of the present invention. The printed adhesive film must be sufficiently pinned in order to fix the image but remain sufficiently liquid on the surface of the printed adhesive film in order to fully adhere the overlying foil. If the printed adhesive film does not remain sufficiently liquid, pinholes will be visible in block areas of the foiled image.

Pinning is achieved by exposure to actinic radiation. The source of actinic radiation can be any source of actinic radiation that is suitable for curing radiation-curable inks but is preferably a UV source. Medium pressure mercury lamps may be used as the pinning source. LED lamps may also be used as the pinning source. In a preferred embodiment, the inkjet adhesive is pinned by exposure to UV radiation from LEDs. When LEDs are used, these are preferably provided as an array of multiple LEDs.

It will be understood that UV LED light sources emit radiation having a spread of wavelengths. The emission of UV LED light sources is identified by the wavelength which corresponds to the peak in the wavelength distribution. Compared to conventional mercury lamp UV sources, UV LED light sources emit UV radiation over a narrow range of wavelengths on the wavelength distribution. The width of the range of wavelengths on the wavelength distribution is called a wavelength band. LEDs therefore have a narrow wavelength output when compared to other sources of UV radiation. By a narrow wavelength band, it is meant that at least 90%, preferably at least 95%, of the radiation emitted from the UV LED light source has a wavelength within a wavelength band having a width of 50 nm or less, preferably, 30 nm or less, most preferably 15 nm or less.

In a preferred embodiment, at least 90%, preferably at least 95%, of the radiation emitted from the UV LED light source has a wavelength in a band having a width of 50 nm or less, preferably 30 nm or less, most preferably 15 nm or less.

Preferably, the wavelength of the UV LED source substantially matches the absorption profile of the ink. In a preferred embodiment, the wavelength distribution of the UV LED light peaks at a wavelength of from 380 nm to 410 nm. In a particularly preferred embodiment, the wavelength distribution of the UV LED light peaks at a wavelength of around 395 nm, 400 nm or 405 nm. The inkjet adhesive of the present invention is preferably formulated to respond to the emission of the UV LED source.

In a particularly preferred embodiment, the wavelength distribution of the UV LED light peaks at a wavelength of from 380 nm to 410 nm, and at least 90%, preferably at least 95%, of the radiation has a wavelength in a band having a width of 50 nm or less, preferably 30 nm or less, most preferably 15 nm or less. In a particularly preferred embodiment, the wavelength distribution of the UV LED light peaks at a wavelength of around 395 nm, 400 nm or 405 nm, and at least 90%, preferably at least 95%, of the radiation has a wavelength in a band having a width of 50 nm or less, preferably 30 nm or less, most preferably 15 nm or less.

LEDs have a longer lifetime and exhibit no change in the power/wavelength output over time. LEDs also have the advantage of switching on instantaneously with no thermal stabilisation time and their use results in minimal heating of the substrate.

The exposure to UV LED light may be performed in an inert atmosphere, e.g. using a gas such as nitrogen, in order to assist curing of the ink. However, pinning the inkjet adhesive is preferably performed in ambient air in order to inhibit surface cure of the inkjet adhesive as described above.

In step (iv), a foil sheet is applied to the substrate to adhere the foil to the inkjet adhesive to form the image. The resultant image is a foiled or metallic image. Suitable foil sheets are available from API such as 1000TA bright silver from the TA range.

The foil sheet may have a removable backing. For example, the foil sheet may be provided on a thin polyester liner.

In step (v), the inkjet adhesive is cured by exposing the inkjet adhesive to actinic radiation through the foil sheet. The source of actinic radiation can be any source of actinic radiation that is suitable for curing radiation-curable inks but is preferably a UV source. Suitable UV sources include mercury discharge lamps, fluorescent tubes, light emitting diodes (LEDs), flash lamps and combinations thereof. One or more mercury discharge lamps, fluorescent tubes, or flash lamps may be used as the radiation source. When LEDs are used, these are preferably provided as an array of multiple LEDs.

Preferably, pinning the inkjet adhesive is by exposing the inkjet adhesive to a first dose of actinic radiation and curing the inkjet adhesive is by exposing the inkjet adhesive to a second, higher dose of actinic radiation.

A suitable first dose of actinic radiation (the "pinning dose") is lower than the dose required for (full) cure, and is typically 1-200 mJ/cm$^2$, preferably 1-100 mJ/cm$^2$ and more preferably 1-50 mJ/cm$^2$.

A suitable second dose (the "cure dose") would be greater than 200 mJ/cm$^2$, more preferably at least 300 mJ/cm$^2$ and most preferably at least 500 mJ/cm$^2$. The upper limit is less relevant and will be limited only by the commercial factor that more powerful radiation sources increase cost. A typical upper limit would be 5 J/cm$^2$.

In step (vi), any excess foil is removed to reveal the image. This could be done by brushing the surface of the image or applying a jet of air. Preferably, the foil sheet has a removable backing and step (vi) further comprises removing the backing and any excess foil to reveal the image. Any excess foil remains on the backing when the backing is removed from the image.

The image is a relatively thin foiled film. The inkjet adhesive of the present invention typically produces a printed image having a thickness of 1 to 30 $\mu$m, preferably 5 to 25 $\mu$m and more preferably 10 to 20 $\mu$m. Film thicknesses can be measured using a confocal laser scanning microscope.

The present invention also provides a printed substrate having the image as defined herein printed thereon.

The invention will now be described with reference to the following examples, which are not intended to be limiting.

## Examples

Example 1

An inkjet adhesive was prepared. The adhesive had a formulation as shown in Table 1.

Table 1. Inkjet adhesive formulation 1

| **Component** | **Amount** |
|---|---|
| IBOA | 30.0 |
| CTFA | 15.0 |
| PEA | 41.7 |
| Elvacite® 2013 | 4.0 |
| Florstab UV12 | 0.5 |
| Irgacure 819 | 3.8 |
| Irgacure 184 | 3.0 |
| TEGO® Rad 2300 | 2.0 |
| **Total** | **100.00** |

Elvacite® 2013 is an acrylic resin. Florstab UV12 is a stabiliser. Irgacure 819 and Irgacure 184 are photoinitiators. TEGO® Rad 2300 is a wetting, flow, and slip additive.

The inkjet adhesive was used in a method of cold foil printing of the present invention. The substrate used was polypropylene top white (a bi-axially oriented, gloss white polypropylene film with a print-receptive top coating) supplied by Avery Dennison. The foil sheet used was 1000TA bright silver from API.

The inkjet adhesive was printed using a Nilpeter FA2500 flexographic press base machine modified by mounting a Xaar print engine employing a Xaar 1002 printhead and an integral Baldwin 395 nm 20 W/cm LED array for pinning. The LED power setting on Xaar bar was 25% power (1000 mA). The print resolution was 360x360 grey scale level 7 dpd (drops per drop) depositing an approximately 20 micron film. The Nilpeter FA2500 settings were: print speed 20

linear m/min; unwind pressure 0.7 bars; rewind pressure 0.5 bars; nip roller pressure 0.7 bars; and a final UV cure 100% (GEW medium pressure mercury lamp - 400 W/inch).

The results can be seen in Figs. 1 and 2. Fig. 1 shows a high-definition image with the fine lines preserved using the inkjet adhesive. Fig. 2 shows a high-definition image with a pinhole-free block area using the inkjet adhesive. Good adhesion of the foiled image to the substrate is also observed.

Example 2 (comparative)

A comparative inkjet adhesive was prepared. The comparative adhesive had a formulation as shown in Table 2.

Table 2. Inkjet adhesive formulation 2

| **Component** | **Amount** |
|---|---|
| CTFA | 35.1 |
| NVC | 17.5 |
| HDDA | 8.6 |
| DPHA | 6.5 |
| IDA | 7.5 |
| Florstab UV12 | 0.8 |
| EBECRYL® 80 | 10 |
| Irgacure 184 | 4.0 |
| Irgacure 819 | 8.0 |
| TEGO® Rad 2300 | 2.0 |
| **Total** | **100.00** |

NVC is a restricted monomer of the inkjet adhesive of the present invention. HDDA is a difunctional (meth)acrylate monomer and DPHA is a hexafunctional (meth)acrylate monomer. EBECRYL® 80 is an amine-modified polyether tetraacrylate oligomer.

The inkjet adhesive was printed using the same method described in Example 1.

The results can be seen in Figs. 3 and 4. Fig. 3 shows a low-definition image with the fine lines lost using the comparative inkjet adhesive. Fig. 4 shows a low-definition image with a block area containing pinholes using the comparative inkjet adhesive.

Example 3

An inkjet adhesive was prepared. The adhesive had a formulation as shown in Table 3.

Table 3. Inkjet adhesive formulation 3

| **Component** | **Amount** |
|---|---|
| IBOA | 30.0 |
| PEA | 31.7 |
| MPDDA | 25.0 |
| Elvacite® 2013 | 4.0 |
| Florstab UV12 | 0.5 |
| Irgacure 819 | 3.8 |
| Irgacure 184 | 3.0 |
| TEGO® Rad 2300 | 2.0 |
| **Total** | **100.00** |

MPDDA is a difunctional monomer.

The inkjet adhesive was printed using the same method described in Example 1.

The inkjet adhesive showed good foiling performance.

## Claims

1. An inkjet adhesive comprising: two or more monofunctional monomers, each having a log $D_{octanol/water}$ of 1.1 or higher; either an additional monofunctional monomer having a log $D_{octanol/water}$ of 1.1 or higher or a difunctional monomer having a log $D_{octanol/water}$ of 1.1 or higher; and one or more photoinitiators, wherein the inkjet adhesive: contains less than 0.5% by weight of monomers having a log $D_{octanol/water}$ of lower than 1.1, based on the total weight of the inkjet adhesive; contains less than 10% by weight of multifunctional monomers, based on the total weight of the inkjet adhesive; and is free from a colouring agent, and wherein

$$\log D_{oct/wat} = \log\left(\frac{[\text{solute}]^{\text{ionized}}_{\text{octanol}} + [\text{solute}]^{\text{un-ionized}}_{\text{octanol}}}{[\text{solute}]^{\text{ionized}}_{\text{water}} + [\text{solute}]^{\text{un-ionized}}_{\text{water}}}\right).$$

2. An inkjet adhesive as claimed in claim 1 comprising one or more monofunctional monomers each have a log $D_{octanol/water}$ of 1.3 or higher.

3. An inkjet adhesive as claimed in claim 2, wherein the inkjet adhesive contains less than 0.5% by weight of monomers having a log $D_{octanol/water}$ of lower than 1.3, based on the total weight of the inkjet adhesive.

4. An inkjet adhesive as claimed in any preceding claim comprising one or more monofunctional monomers each have a log $D_{octanol/water}$ of 1.5 or higher.

5. An inkjet adhesive as claimed in claim 4, wherein the inkjet adhesive contains less than 0.5% by weight of monomers having a log $D_{octanol/water}$ of lower than 1.5, based on the total weight of the inkjet adhesive.

6. An inkjet adhesive as claimed in any preceding claim, wherein the inkjet adhesive further comprises one or more difunctional monomers, each having a log $D_{octanol/water}$ of 1.1 or higher.

7. An inkjet adhesive as claimed in any preceding claim, wherein the inkjet adhesive comprises isobornyl acrylate, cyclic trimethylolpropane formal acrylate, phenoxyethyl acrylate or mixtures thereof.

8. An inkjet adhesive as claimed in any preceding claim, wherein the one or more photoinitiators each have a $\lambda_{max}$ greater than 350 nm.

9. An inkjet adhesive as claimed in any preceding claim, wherein the one or more photoinitiators comprise an acylphosphine oxide.

10. An inkjet adhesive as claimed in any preceding claim, wherein the inkjet adhesive comprises two or more photoinitiators.

11. A method of cold foil printing comprising:

    (i) providing an inkjet adhesive;
    (ii) jetting the inkjet adhesive onto a substrate to form a base of an image, wherein the inkjet adhesive is the inkjet adhesive as claimed in any of claims 1-10;
    (iii) pinning the inkjet adhesive;
    (iv) applying a foil sheet to the substrate to adhere the foil to the inkjet adhesive to form the image;
    (v) curing the inkjet adhesive by exposing the inkjet adhesive to actinic radiation through the foil sheet; and
    (vi) removing any excess foil to reveal the image.

12. A method of cold foil printing as claimed in claim 11, wherein the foil sheet has a removable backing and step (vi)

further comprises removing the backing and any excess foil to reveal the image.

**13.** A method of cold foil printing as claimed in claim 11 or 12, wherein pinning the inkjet adhesive is by exposing the inkjet adhesive to a first dose of actinic radiation and curing the inkjet adhesive is by exposing the inkjet adhesive to a second, higher dose of actinic radiation.

**Patentansprüche**

**1.** Tintenstrahlklebstoff, umfassend: zwei oder mehr monofunktionelle Monomere, jeweils mit einem log $D_{Octanol/Wasser}$ von 1,1 oder höher; entweder ein zusätzliches monofunktionelles Monomer mit einem log $D_{Octanol/Wasser}$ von 1,1 oder höher oder ein difunktionelles Monomer mit einem log $D_{Octanol/Wasser}$ von 1,1 oder höher; und einen oder mehrere Photoinitiatoren, wobei der Tintenstrahlklebstoff: weniger als 0,5 Gew.-% Monomere mit einem log $D_{Octanol/Wasser}$ von niedriger als 1,1, basierend auf dem Gesamtgewicht des Tintenstrahlklebstoffs, enthält; weniger als 10 Gew.-% multifunktionelle Monomere, basierend auf dem Gesamtgewicht des Tintenstrahlklebstoffs, enthält; und frei von einem Färbemittel ist, und wobei

$$\log D_{Oct/Wass} = \log\left(\frac{[Solut]^{ionisiertes}_{Octanol} + [Solut]^{nicht\text{-}ionisiertes}_{Octanol}}{[Solut]^{ionisiertes}_{Wasser} + [Solut]^{nicht\text{-}ionisiertes}_{Wasser}}\right).$$

**2.** Tintenstrahlklebstoff nach Anspruch 1, umfassend ein oder mehrere monofunktionelle Monomere, jeweils mit einem log Doctanoi/wasser von 1,3 oder höher.

**3.** Tintenstrahlklebstoff nach Anspruch 2, wobei der Tintenstrahlklebstoff weniger als 0,5 Gew.-% Monomere mit einem log $D_{Octanol/Wasser}$ von niedriger als 1,3, basierend auf dem Gesamtgewicht des Tintenstrahlklebstoffs, enthält.

**4.** Tintenstrahlklebstoff nach einem vorhergehenden Anspruch, umfassend ein oder mehrere monofunktionelle Monomere, jeweils mit einem log Doctanoi/wasser von 1,5 oder höher.

**5.** Tintenstrahlklebstoff nach Anspruch 4, wobei der Tintenstrahlklebstoff weniger als 0,5 Gew.-% Monomere mit einem log $D_{Octanol/Wasser}$ von niedriger als 1,5, basierend auf dem Gesamtgewicht des Tintenstrahlklebstoffs, enthält.

**6.** Tintenstrahlklebstoff nach einem vorhergehenden Anspruch, wobei der Tintenstrahlklebstoff ferner ein oder mehrere difunktionelle Monomere, jeweils mit einem log $D_{Octanol/Wasser}$ von 1,1 oder höher, umfasst.

**7.** Tintenstrahlklebstoff nach einem vorhergehenden Anspruch, wobei der Tintenstrahlklebstoff Isobornylacrylat, cyclisches Trimethylolpropanformalacrylat, Phenoxyethylacrylat oder Gemische davon umfasst.

**8.** Tintenstrahlklebstoff nach einem vorhergehenden Anspruch, wobei der eine oder mehrere Photoinitiatoren jeweils einen $\lambda_{max}$ größer als 350 nm aufweisen.

**9.** Tintenstrahlklebstoff nach einem vorhergehenden Anspruch, wobei der eine oder mehrere Photoinitiatoren ein Acylphosphinoxid umfassen.

**10.** Tintenstrahlklebstoff nach einem vorhergehenden Anspruch, wobei der Tintenstrahlklebstoff zwei oder mehr Photoinitiatoren umfasst.

**11.** Kaltfoliendruckverfahren, umfassend:

(i) Bereitstellen eines Tintenstrahlklebstoffs;
(ii) Spritzen des Tintenstrahlklebstoffs auf ein Substrat, um eine Basis eines Bildes zu bilden, wobei der Tintenstrahlklebstoff der Tintenstrahlklebstoff nach einem der Ansprüche 1-10 ist,
(iii) Fixieren des Tintenstrahlklebstoffs;
(iv) Aufbringen eines Folienbogens auf das Substrat zum Anhaften der Folie an den Tintenstrahlklebstoff, um das Bild zu bilden,
(v) Aushärten des Tintenstrahlklebstoffs durch Aussetzen des Tintenstrahlklebstoffs an aktinische Strahlung durch den Folienbogen; und

(vi) Entfernen von überschüssiger Folie, um das Bild freizulegen.

12. Kaltfoliendruckverfahren nach Anspruch 11, wobei der Folienbogen einen entfernbaren Träger aufweist und Schritt (vi) ferner das Entfernen des Trägers und von jeglicher überschüssiger Folie zum Freilegen des Bildes umfasst.

13. Kaltfoliendruckverfahren nach Anspruch 11 oder 12, wobei das Fixieren des Tintenstrahlklebstoffs durch Aussetzen des Tintenstrahlklebstoffs an eine erste Dosis aktinischer Strahlung erfolgt und das Aushärten des Tintenstrahlklebstoffs durch Aussetzen des Tintenstrahlklebstoffs an eine zweite, höhere Dosis aktinischer Strahlung erfolgt.

## Revendications

1. Adhésif pour jet d'encre comprenant : deux monomères monofonctionnels ou plus, chacun comportant un log $D_{octanol/eau}$ de 1,1 ou plus ; soit un monomère monofonctionnel supplémentaire comportant un log $D_{octanol/eau}$ de 1,1 ou plus, soit un monomère difonctionnel comportant un log $D_{octanol/eau}$ de 1,1 ou plus ; et un ou plusieurs photoinitiateurs, dans lequel l'adhésif pour jet d'encre : contient moins de 0,5 % en poids de monomères comportant un log $D_{octanol/eau}$ inférieur à 1,1, sur la base du poids total de l'adhésif pour jet d'encre ; contient moins de 10 % en poids de monomères multifonctionnels, sur la base du poids total de l'adhésif pour jet d'encre ; et est exempt d'agent colorant, et dans lequel

$$\log D_{\text{oct/eau}} = \log\left(\frac{[\text{solute}]_{\text{ionisé}}^{\text{octanol}} + [\text{solute}]_{\text{non ionisé}}^{\text{octanol}}}{[\text{solute}]_{\text{ionisée}}^{\text{eau}} + [\text{solute}]_{\text{non ionisée}}^{\text{eau}}}\right).$$

2. Adhésif pour jet d'encre selon la revendication 1, comprenant un ou plusieurs monomères monofonctionnels comportant chacun un log $D_{octanol/eau}$ de 1,3 ou plus.

3. Adhésif pour jet d'encre selon la revendication 2, dans lequel l'adhésif pour jet d'encre contient moins de 0,5 % en poids de monomères comportant un log $D_{octanol/eau}$ inférieur à 1,3, sur la base du poids total de l'adhésif pour jet d'encre.

4. Adhésif pour jet d'encre selon l'une quelconque des revendications précédentes, comprenant un ou plusieurs monomères monofonctionnels comportant chacun un log $D_{octanol/eau}$ de 1,5 ou plus.

5. Adhésif pour jet d'encre selon la revendication 4, dans lequel l'adhésif pour jet d'encre contient moins de 0,5 % en poids de monomères comportant un log $D_{octanol/eau}$ inférieur à 1,5, sur la base du poids total de l'adhésif pour jet d'encre.

6. Adhésif pour jet d'encre selon l'une quelconque des revendications précédentes, dans lequel l'adhésif pour jet d'encre comprend en outre un ou plusieurs monomères difonctionnels, chacun comportant un log $D_{octanol/eau}$ de 1,1 ou plus.

7. Adhésif pour jet d'encre selon l'une quelconque des revendications précédentes, dans lequel l'adhésif pour jet d'encre comprend de l'acrylate d'isobornyle, acrylate de triméthylolpropane cyclique, acrylate de phénoxyéthyle ou des mélanges de ceux-ci.

8. Adhésif pour jet d'encre selon l'une quelconque des revendications précédentes, dans lequel l'un ou plusieurs photoinitiateurs comportent chacun un $\lambda_{max}$ supérieur à 350 nm.

9. Adhésif pour jet d'encre selon l'une quelconque des revendications précédentes, dans lequel l'un ou plusieurs photoinitiateurs comprennent un oxyde d'acylphosphine.

10. Adhésif pour jet d'encre selon l'une quelconque des revendications précédentes, dans lequel l'adhésif pour jet d'encre comprend deux photoinitiateurs ou plus.

11. Procédé de dorure à froid comprenant :

(i) la fourniture d'un adhésif pour jet d'encre ;

(ii) la projection de l'adhésif pour jet d'encre sur un substrat pour former une base d'image, dans lequel l'adhésif pour jet d'encre est l'adhésif pour jet d'encre selon l'une quelconque des revendications 1 à 10 ;
(iii) l'ancrage de l'adhésif pour jet d'encre ;
(iv) l'application d'une feuille de papier de dorure au substrat pour faire adhérer le papier de dorure à l'adhésif pour jet d'encre afin de former l'image ;
(v) le durcissement de l'adhésif pour jet d'encre en exposant l'adhésif pour jet d'encre à un rayonnement actinique à travers la feuille de papier de dorure ; et
(vi) le retrait de tout excès de papier de dorure pour révéler l'image.

**12.** Procédé de dorure à froid selon la revendication 11, dans lequel la feuille de papier dorure comporte un support amovible et l'étape (vi) comprend en outre le retrait du support et de tout excédent de papier de dorure pour révéler l'image.

**13.** Procédé de dorure à froid selon la revendication 11 ou 12, dans lequel l'ancrage de l'adhésif pour jet d'encre s'effectue en exposant l'adhésif pour jet d'encre à une première dose de rayonnement actinique et le durcissement de l'adhésif pour jet d'encre s'effectue en exposant l'adhésif pour jet d'encre à une seconde dose plus élevée de rayonnement actinique.

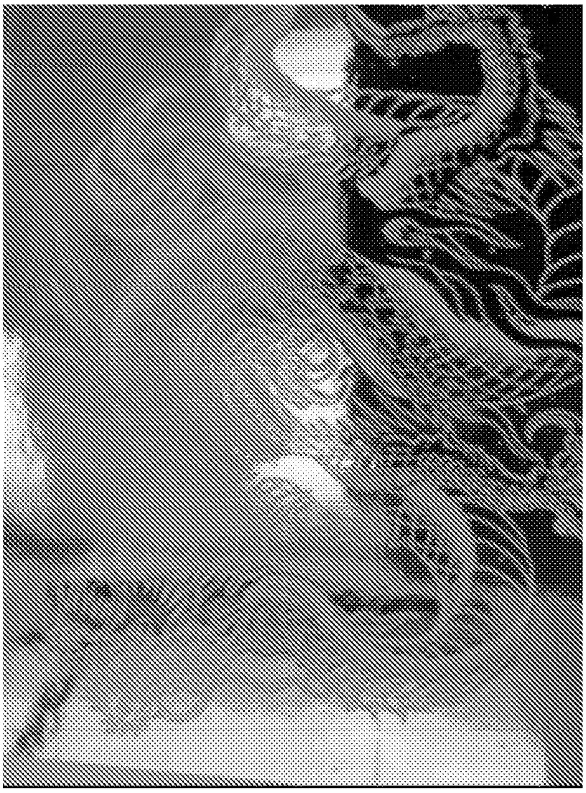

Fig. 1

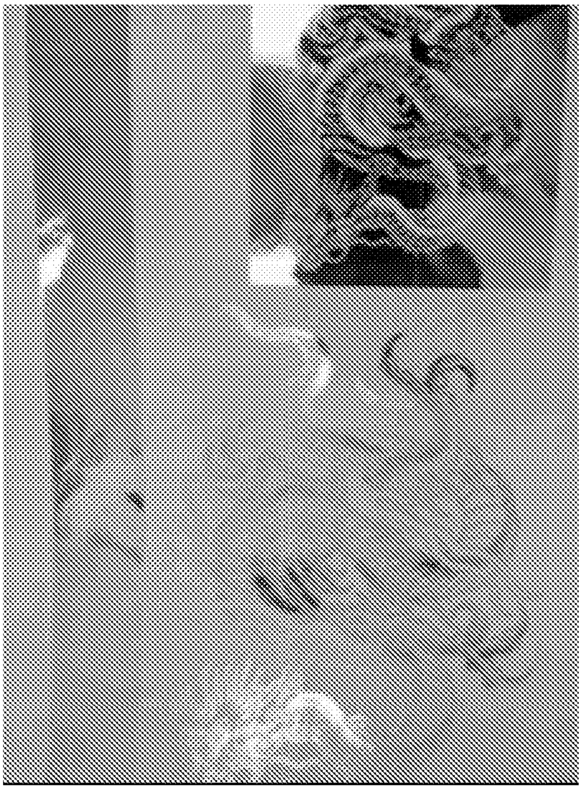

Fig. 2

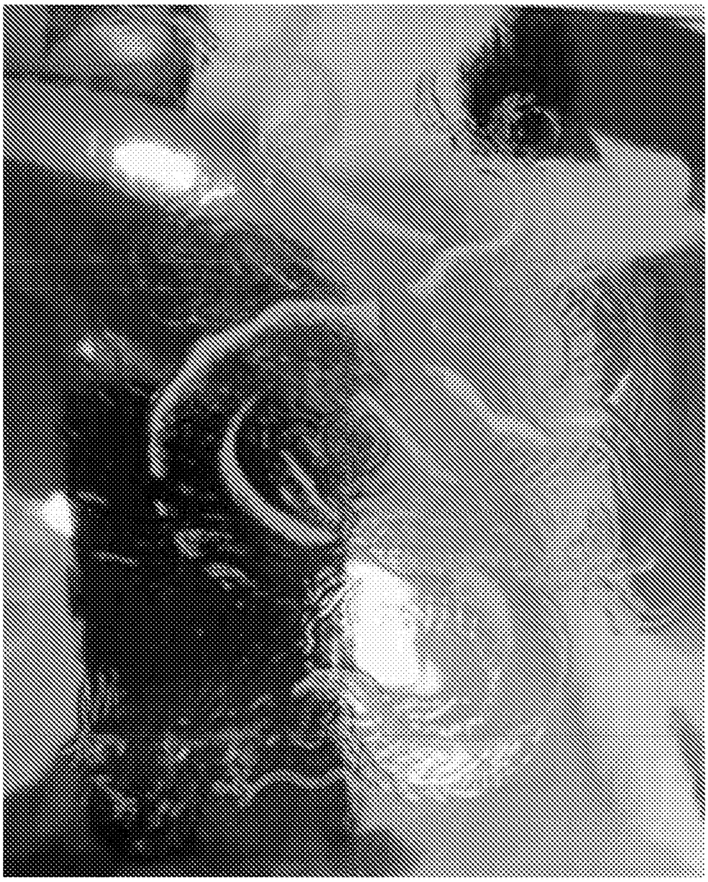

Fig. 3

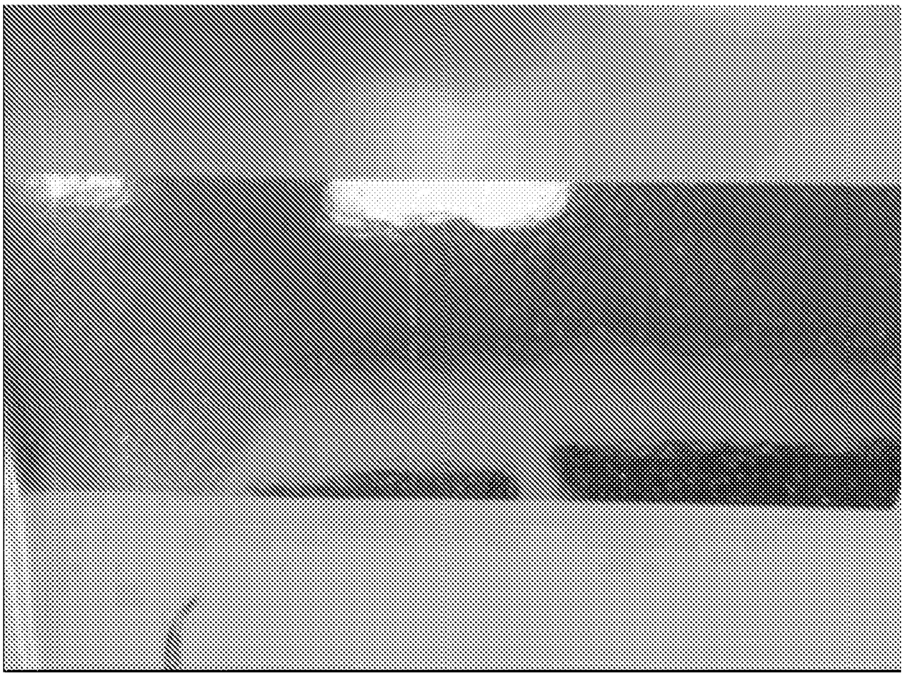

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017122046 A
- EP 3034312 A
- US 2013222497 A
- US 2013230701 A
- US 9587127 B
- US 2006098064 A
- WO 2015140540 A
- EP 3300915 A
- WO 2015022228 A
- US 4831153 A


### Non-patent literature cited in the description


- **L. COTARCA ; H. ECKERT.** Phosgenations. John Wiley & Sons, 2003, 212-213
- *CHEMICAL ABSTRACTS,* 3395-98-0